# EUROPEAN PATENT SPECIFICATION

(11) **EP 3 330 719 B1**
(45) Date of publication and mention of the grant of the patent: **03.07.2019**
(21) Application number: 17161085.0
(22) Date of filing: 15.03.2017
(51) Int. Cl.: G01P 3/49, G01P 3/50

(54) **SYSTEM AND METHOD FOR MEASURING THE SPEED OF A GUIDED VEHICLE**
SYSTEM UND VERFAHREN ZUR MESSUNG DER GESCHWINDIGKEIT EINES GEFÜHRTEN FAHRZEUGS
SYSTÈME ET PROCÉDÉ POUR MESURER LA VITESSE D'UN VÉHICULE GUIDÉ

(30) Priority: 30.11.2016 EP 16380035
(43) Date of publication of application: 06.06.2018
(73) Proprietor: Siemens Rail Automation S.A.U., 28760 Tres Cantos (Madrid) (ES)
(72) Inventor: GARRIDO BARROSO, David, 28805 Alcala de Henares (ES)
(74) Representative: Maier, Daniel Oliver

(56) References cited:
- DE-B- 1 147 787
- DE-B- 1 214 910
- JP-A- H08 146 024
- US-A- 2 481 196

## Description

The present invention concerns a system and a method for measuring the speed of guided vehicle.

The present invention is directed to odometry techniques for determining an actual speed and position for a guided vehicle moving along a route. "Guided vehicle" according to the present invention refers generally to a device for carrying or transporting substances, objects or individuals that is guided by at least one guiding means, such as a rail, and refers more particularly to public transport means such as buses, trolleybuses, streetcars, subways, trains or train units, etc., as well as load transporting means such as, for example, overhead traveling cranes or mining transportation means for which safety is a very important factor and which are guided along a route or railway by at least one rail, in particular by two rails.

Guided vehicles usually comprise automatic systems for controlling its speed in function of its position and/or of external inputs, which are for instance the neighboring presence of another guided vehicle, or the presence of a curve that requires a decrease of the guided vehicle speed. Examples of automatic systems are the Automatic train control (ATC) or the Automatic train protection (ATP) systems that commonly equip trains. Therefore, for safety reason, the speed and position of a guided vehicle are important parameters that need to be precisely and reliably determined.

Up to now, different techniques have been used to determine the speed and/or position of a guided vehicle. They are for example techniques using balises, global navigation satellites, track circuits, tachometers, Doppler radar, etc. Unfortunately most of said techniques fail to detect wheel slip/slide events and/or near zero speed that may affect a speed/position measurement, and are often quite complex systems.

JP-H 08-146024, DE-B-1214910 and DE-B-1147787 each disclose eddy current speed sensing systems employing the creation of a magnetic field and the determination of eddy currents representative of the moving speed. The magnetic field remains stationary with regard to two magnetic flux sensors, and the speed is proportional to the flux difference in the sensors.

An objective of the present invention is therefore to propose a system and a method for determining the speed and/or position of a guided vehicle that is simple, precise and overcome the slip / slide and near zero speed problems. The aforementioned objective is achieved by a system and a method according to the independent claims. Further embodiments and other advantages of the present invention are proposed in the dependent claims.

The invention proposes in particular a system for determining the speed S of a guided vehicle and/or the distance travelled by said guided vehicle, the latter being guided along a route by at least one electrically conductive rail serving as guide for the guided vehicle and defining a predefined route for the latter, wherein said conductive rail extends according to its length along a direction R. The system according to the invention is notably configured for being installed on-board the guided vehicle, for instance on a bogie of the guided vehicle, so as to be able to interact with the conductive rail as it will be explained hereafter.

According to the present invention, the system preferentially comprises:
- a device for producing a magnetic field B preferentially facing the conductive rail and capable of inducing Eddy current in the conductive rail when the system is installed on-board the guided vehicle, said device being capable of displacing or translating its magnetic field B at an instant T_i at a speed V wherein the speed vector for said displacement is parallel to the direction R of extension of the conductive rail. In other words, the displacement or translation of the magnetic field B is parallel to the direction R of extension of the conductive rail. Said device comprises for instance at least one magnet, like a permanent magnet and/or an electromagnet;
- a magnetic flux sensor configured for measuring a reciprocal magnetic field resulting from the Eddy currents created in the conductive rail by the magnetic field B;
- a controller connected to the device and to the magnetic flux sensor in order to control the displacement of the magnetic field in function of a value of the reciprocal magnetic field measured by said magnetic flux sensor in order to determine the speed S of the guided vehicle, wherein said controller is configured for controlling the displacement or translation of the magnetic field B so that at the instant T, the reciprocal magnetic field measured by the magnetic flux sensor is minimized, preferentially equal to zero, leading to S = V.

The present invention also concerns a method for determining the speed S of a guided vehicle guided along a route by at least one conductive rail extending according to its length along a direction R, the method comprising:
- producing a magnetic field B capable of inducing Eddy currents in the conductive rail;
- measuring a reciprocal magnetic field resulting from the Eddy currents created in the conductive rail by the magnetic field B;
- displacing at a time T_i the magnetic field B according to a speed vector *̅V̅*̅ that is parallel to the direction R of extension of the conductive rail, wherein the magnitude, and optionally direction, of the speed vector *̅V̅*̅ at said time T_i is controlled by a controller (6) in function of a value of the reciprocal magnetic field measured so that at said time T_i, the reciprocal magnetic field measured is minimized, leading to S = |*̅V̅*̅|.

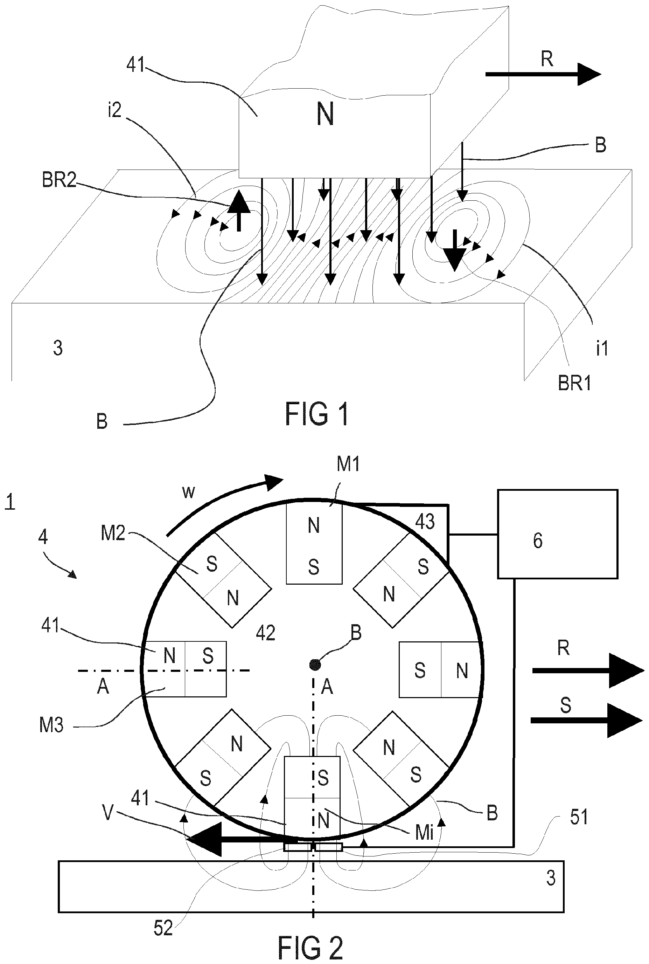

Figure 1 allows to better understand the concept of the present invention. Indeed, according to the present invention, when the guided vehicle moves in the direction R over the conductive rail 3, the direction of the magnetic field B generated by the device comprising a magnet 41 with its north pole pointing toward the conductive rail 3 is preferentially directed towards said conductive rail 3 and said magnetic field B will induce Eddy currents i1, i2 within the conductive rail 3 as shown in Figure 1. By considering a relative movement between the guided vehicle and the conductive rail 3 (the guided vehicle moving for instance from upstream to downstream according to said direction R), the part of the magnetic field B that is at the leading edge (i.e. the downstream part of said magnetic field if one considers the guided vehicle moving from upstream to downstream - right part of the magnetic field B in Fig. 1) will induce Eddy currents i1 that flow clockwise and the part of the magnetic field B that is at the trailing edge (i.e. the upstream part - on the left in Fig. 1) will induce counter-clockwise Eddy currents i2. This creates thus two loops of Eddy currents, wherein the Eddy currents of each loop will in turn generate said reciprocal magnetic field, respectively a first reciprocal magnetic field BR1 and a second reciprocal magnetic field BR2 which are proportional to the relative velocity of the guided vehicle with respect to the conductive rail 3, which is in this case immobile. The higher the speed of the guided vehicle compared to the immobile conductive rail 3, the higher will be the flux density of BR1 and BR2. If relative speed is zero, then no Eddy currents will appear, and therefore no Lenz's effect is produced either. Therefore, the speed of the guided vehicle could be obtained by direct measurement of the Lenz's force detected by means of the magnetic flux sensor.

The basic idea of the present invention is to use a feedback loop for controlling by means of the controller a motion or displacement of the magnetic field B at a time T_i in function of a value of the reciprocal magnetic field measured by the magnetic flux sensor, so that said motion or displacement, for instance an instantaneous translation, is made in a direction and according to a speed that are at said time T_i respectively opposed to the direction of displacement of the guided vehicle and equivalent to the speed of the guided vehicle. The aim of the feedback loop is to minimize the value of the reciprocal magnetic field measured by the magnetic flux sensor at said time T_i and transmitted in real time to the controller by tuning and controlling the displacement of the magnetic field B at said time T_i by means of the controller.

Further aspects of the present invention will be better understood through the following drawings, wherein like numerals are used for like and corresponding parts:
- Figure 1: schematic representation of the interaction of a moving magnet with a conductive rail.
- Figure 2: schematic representation of a first embodiment according to the invention.
- Figure 3: detail of the first embodiment according to the invention.
- Figure 4: schematic representation of a second embodiment according to the invention.
- Figure 5: schematic representation of a third embodiment according to the invention.

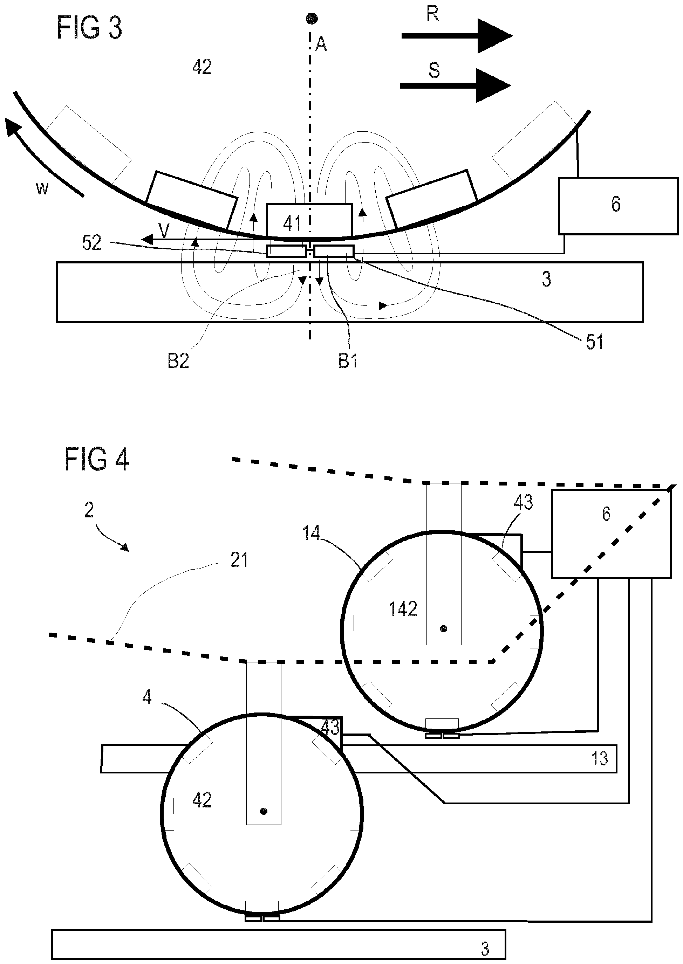

Figure 1 shows the basic concept of the invention, wherein a magnetic field B of a magnet 41 of a device according to the invention interacts with a conductive rail 3 for inducing Eddy currents i1, i2 within the conductive rail 3. A reciprocal magnetic flux generated by at least part of said Eddy currents i1, i2, for instance the reciprocal magnetic flux BR1 and/or the reciprocal magnetic flux BR2, is measured by a magnetic flux sensor (see reference 51 and 52 in Fig. 2 or Fig. 3) located between the magnet 41 and the conductive rail 3. Values of measurement(s) of said reciprocal magnetic flux are transmitted in real time to a controller 6 (see Fig. 2) which is configured for controlling and tuning, by means of said device, a displacement of the magnetic field B in a direction and at a speed that are opposed to the direction R and speed vector *̅S̅*̅ (see Figure 2) of the guided vehicle so that the reciprocal magnetic flux measured by the magnetic flux sensor is minimized or equal to zero at least at a time T_i, which means that the relative speed of the conductive rail 3 and magnet 41 is zero at said time T_i, that is |*̅S̅*̅(T_i)|=|*̅V̅*̅(T_i)|, wherein *̅V̅*̅(T_i) is the speed vector of the magnetic field B (or of the part of the magnet 41 that is the closest to the conductive rail 3) at said time T_i.

Figure 2 shows a preferred embodiment of a system 1 according to the invention. Said system 1 is designed for being mounted on-board a guided vehicle which is configured for following a route defined by at least one electrically conductive rail 3, the guided vehicle moving for instance at a speed S with speed vector *̅S̅*̅ according to the direction R illustrated by the corresponding arrows in Figure 2, said direction R being also the direction of extension of the conductive rail 3. The system 1 according to the invention is preferentially installed on a bogie 21 of the guided vehicle 2 (see Fig. 4).

The system 1 according to the invention comprises for instance:
- a device 4 for producing at least one magnetic field B, wherein each magnetic field B is preferentially homogeneous and comprises a plane A of symmetry with respect to which it is symmetric. According to the present invention, said plane of symmetry A is in particular perpendicular to the direction R of extension of the conductive rail 3 at at least said time T_i that takes place during the determination of the speed of the guided vehicle and when the system according to the invention is installed on-board the guided vehicle. Said device 4 comprises in particular at least one magnet 41, preferentially a series of magnets 41, for instance electromagnets or permanent magnets. The magnets 41 are preferentially identical and configured each for producing an identical magnetic field B, each comprising said plane A of symmetry;
- a magnetic flux sensor comprising preferentially a first magnetic flux sensor 51 and a second magnetic flux sensor 52, configured for measuring reciprocal magnetic flux generated by the induced Eddy currents at said time T_i;
- a controller 6 connected to the device 4 and to the magnetic flux sensor, for instance to the first magnetic flux sensor 51 and to the second magnetic flux sensor 52, wherein the controller is configured for controlling the device 4 in function of values of magnetic flux measured by magnetic flux sensor, for instance by the first and/or second magnetic flux sensors, so that the values measured are kept at their minimum, implying that the speed characterizing the displacement of the magnetic field B at said time T_i (which is a known parameter) is equal to the speed of the guided vehicle at said time T_i.

According to the present invention, the device 4 is capable of displacing the magnetic field B produced by the magnet 41 at said time T_i according to a direction that is parallel to the direction R of extension of the conductive rail 3, but opposed to the latter, so that the speed vector *̅V̅*̅ characterizing said displacement at the time T_i is opposed to the speed vector *̅S̅*̅ characterizing the displacement of the guided vehicle along the conductive rail 3 at said time T_i. In other words, thanks to said device 4, the magnetic field B is characterized at said time T_i by a speed vector *̅V̅*̅ that is parallel but opposed to the speed vector *̅S̅*̅ characterizing the displacement of the guided vehicle at said time T_i. In order to create such a displacement, the present invention proposes in particular to move each magnet 41 according to a rotational movement, so that at at least said time T_i, the displacement of the magnetic field B of the magnet 41 is characterized by the speed vector *̅V̅*̅ that is opposed to the speed vector *̅S̅*̅ characterizing the displacement of the guided vehicle at said time T_i.

For this purpose and in particular, the plurality of magnets Mi, i=1,,N, with N the number of magnets 41, are arranged on a support drivable into rotation so that the magnet 41 interact the one after the other one with the conductive rail 3 during the rotation of the support, the magnet Mi inducing at least at said time T_i Eddy currents in said conductive rail 3. Indeed, due to the rotation of said support around an axis of rotation B, said magnets 41 are also driven into rotation around said axis of rotation B, and said rotation moves successively each magnet from a position at the time T_i wherein it is at the closest distance from the conductive rail 3 and wherein it induces said Eddy currents in the conductive rail 3 to a position at a time T_i' wherein it is at the farthest position from the conductive rail 3. Each magnet is preferentially arranged on said support so that the magnetic field B it generates is at said time T_i during the rotation substantially perpendicular to the extension direction R of the conductive rail 3. For instance the magnets are mounted on a spinning wheel 42 which serves in this case as support. The magnets 41 can be arranged around the circumference of said spinning wheel 42 as shown in Fig. 2-4. In this case, the spinning wheel 42 comprises magnets fixed around the complete perimeter facing outwards. Said support, for instance the spinning wheel 42, may rotate clockwise according to the rotation direction w if the guided vehicle is moving forward in the direction R of extension of the conductive rail 3 according to a speed characterized by the speed vector *̅S̅*̅, or counterclockwise according to the rotation direction -w if the guided vehicle is moving backward. The device 4 further comprises in particular a motor 43, for instance a speed variable motor, for driving into rotation the support, for instance said spinning wheel 42, said motor 43 being preferentially controlled by the controller 6 in function of magnetic field values measured in real time by the magnetic flux sensor so that the controller 6 is configured for controlling the rotation of the support (spinning wheel 42) in function of values of the reciprocal magnetic flux measured by the magnetic flux sensor, notably measured by the first and second magnetic flux sensors 51, 52.

According to the present invention and as illustrated in Fig. 2, the rotation of the spinning wheel 42 drives into rotation the plurality of magnets 41. According to the present invention, it is not essential to have a plurality of magnets, a support or spinning wheel 42 comprising a single magnet 41 would be sufficient. During the rotation of the spinning wheel 42, each magnet passes successively at proximity of the conductive rail 3, i.e. at said position that is at the closest distance from the conductive rail 3. Therefore, during the rotation of the spinning wheel 42 (or generally speaking of the support), each magnet 41 reaches its closest position to the conductive rail at the time T_i, for instance a first magnet M1 is at said closest distance at time T_1, a second magnet M2 at time T_2, a third magnet M3 at time T_3, wherein the time T_i is a function of the rotational speed w of the support or spinning wheel 42. According to the present invention, the time T_i is the time at which a magnet Mi reaches said closest position wherein it is close enough to the conductive rail 3 for inducing the Eddy currents within said conductive rail 3. At said time T_i, two loops of Eddy currents as described for Fig. 1 are induced within the conductive rail 3, respectively a first loop of Eddy currents i1 and a second loop of Eddy currents i2, which generate respectively the first reciprocal magnetic field BR1 and the second reciprocal magnetic field BR2 which are directed in opposed directions, and notably perpendicularly to the direction R of extension of the conductive rail 3 at the surface of said conductive rail 3 that is facing the magnet 41.

According to the present invention, the magnetic flux sensor comprises preferentially at least one pair of identical magnetic flux sensors, respectively the first magnetic flux sensor 51 located at a position that is on one side of the plane A at the time T_i, and the second magnetic flux sensor 52 located at a position that is, at said time T_i, on the other side of said plane A, symmetrically to the first magnetic flux sensor 51, wherein the first magnetic flux sensor 51 is configured for measuring the first reciprocal magnetic flux BR1 resulting from Eddy currents i1 induced in the conductive rail 3 by the part of the magnetic field B located on said one side of the plane A, and the second magnetic flux sensor 52 is configured for measuring the second reciprocal magnetic flux BR2 resulting from Eddy currents i2 induced within the conductive rail 3 by the part of the magnetic field B located on said other side of the plane A at said time T_i.

Indeed, as shown in more details in Fig. 3, the first magnetic flux sensor 51 and the second magnetic flux sensor 52 are preferentially arranged side by side symmetrically with respect to the plane A of each magnetic field B of each magnet 41 that is moved over the first and second magnetic flux sensors through the rotation of the spinning wheel 42. When said magnet 41 is at the position that is at the closest distance from the conductive rail 3, the magnetic flux sensors 51, 52 are located at the gap between the magnet and the conductive rail 3 so as to be able to sense and measure the reciprocal magnetic fields generated by the induced Eddy currents, the first magnetic flux sensor 51 being arranged at a location suitable for measuring the first reciprocal magnetic flux BR1 and the second magnetic flux sensor 52 being arranged at a location suitable for measuring the second reciprocal magnetic flux BR2 in order to have a separate measurement of the first and second reciprocal magnetic fluxes. In other words, the present invention proposes a separate measurement of the first and second reciprocal magnetic fluxes BR1 and BR2 through respectively the first and second magnetic flux sensors 51 and 52. The symmetric positioning of the first and second magnetic flux sensors with respect to the plane A makes it possible to separately measure the first and the second reciprocal magnetic flux through respectively the first and second magnetic flux sensors.

This arrangement of the magnetic flux sensors according to the invention provides the following advantages:
It is known that Lenz's force is not only proportional to the relative speed between the magnetic field B and the conductive rail 3, but depends also on other variables such as the flux density of the magnetic field B, the gap distance between the magnet 41 and the conductive rail 3, the relative position (orientation) of the magnet 41 with respect to the conductive rail 3, and also the electrical conductivity of the conductive rail 3. The preferred embodiment of Fig. 2 and 3 allow to decrease the impact of said other variables on the determination of the speed of the guided vehicle. Indeed, even if using a single magnetic sensor would lead to the determination of the speed of the guided vehicle, by measuring for instance only the first reciprocal magnetic flux BR1 or the second reciprocal magnetic flux BR2, the use of two identical magnetic flux sensors 51, 52, identical magnets 41 producing symmetric magnetic fields B with respect to the plane A, considerably improves the reliability of the guided vehicle speed measurement. The preferred embodiment according to Figures 2-3 allows to isolate the speed variable by cancelling out the magnetic field contribution of magnet force, gap distance, relative position and rail conductivity, and also to compensate the contribution of the speed variable to the magnetic flux density.

As already explained, the present invention allows to cancel out the relative speed between the guided vehicle 2 and the conductive rail 3 by rotating said support, for instance the spinning wheel 42, according to an angular velocity controlled by the controller 6, so that the tangential speed of the magnetic field B (i.e. the rate of change of angular displacement of said magnetic field B) when the magnet is at the position where it is the closest to the conductive rail 3 is equal and opposed to the (linear) speed of the guided vehicle. By doing so, the relative displacement between the magnet 41 and the conductive rail 3 will be equal to zero. This equilibrium might be implemented by a feedback loop, for instance by means of a closed loop control algorithm hosted in the controller 6 that drives the spinning wheel 42. Once the zero Lenz force equilibrium is obtained, the controller 6 can calculate the guided vehicle speed as a function of the angular velocity of the spinning wheel 42 and the distance between the axis of rotation B and the position of the extremity of the magnet that is at the closest distance from the conductive rail at the time T_i, said distance being preferentially equal to the radius R of the spinning wheel. In this case, one would have for the speed S of the guided vehicle: S = w(T_i)·R, where w(T_i) is the angular velocity of the spinning wheel at the time T_i when a minimum value of the measured reciprocal magnetic flux is reached by tuning the angular velocity of the spinning wheel.

In particular, the present invention allows also a speed measurement as well for a forward motion as for a backward motion of the guided vehicle by spinning the spinning wheel 42 clockwise or counterclockwise.

In particular, the controller 6 is also able to detect a guided vehicle at standstill by determining when the feedback loop controlling the angular velocity of the spinning wheel in function of the measured reciprocal magnetic flux BR1 and BR2 provides as output a direction of rotation w that alternates between clockwise and counterclockwise, the wheel tending to alternate the rotation clockwise and counterclockwise in order to minimize the measured reciprocal magnetic flux. Such an alternation of the direction of rotation might be used by the controller for identifying the zero speed of the guided vehicle. Additionally and optionally, in order to improve the detection of the zero speed of the guided vehicle and as illustrated by Fig. 4, another device 14 identical to the device 4 previously described and another magnetic flux sensor identical to the magnetic flux sensor previously described are provided with respect to a second conductive rail 13, said another device 14 and said another magnetic flux sensor being connected to the controller 6. In this case, the controller 6 is in particular configured for spinning the motorized spinning wheels 42 and 142 in opposite directions of rotation, for instance the spinning wheel 42 rotating clockwise and the other spinning wheel 142 rotating counterclockwise, one of the spinning wheels being used for measuring the guided vehicle speed in case of a forward motion and the other spinning wheel being used for measuring the guided vehicle speed in case of backward motion. In this case, the zero speed is in particular detected by the controller 6 from determining when the measured reciprocal magnetic flux measured by the magnetic flux sensor and by said another magnetic flux sensor are identical in magnitude (a condition that is possible only if the vehicle speed is zero).

Advantageously, the use of said other spinning wheel 142 may not only help in improving the zero speed detection, but might also be used for improving the non-zero speed measurement of the guided vehicle 2 by using an algorithm improving the accuracy or reliability of the speed measurement. Eventually, said other spinning wheel can also be used for robustness purposes (availability). Said other spinning wheel 142 can for instance be arranged for interacting with the same conductive rail 3 as the spinning wheel 42, or with said second conductive rail 13, so as to cope with rail discontinuities. In particular, said other spinning wheel 142 may act as a redundant spinning wheel for improving availability of magnetic field measurements.

According to the present invention and preferentially, the first magnetic flux sensor 51 and the second magnetic flux sensor are identical, located within the gap between the magnet 41 and the conductive rail 3 at the time T_i, so that at said time T_i they are arranged symmetrically with respect to the plane A, which is the plane of symmetry of the magnetic field B of the magnet Mi. This particular arrangement of the first and second magnetic flux sensor allows to isolate the speed variable by cancelling out the magnetic field contribution of magnet force, gap distance, relative position and rail conductivity. Indeed, the first and second magnetic flux sensors are facing the magnet Mi and the conductive rail 3 at said time T_i, with a gap as small as possible between the magnet Mi and the magnetic flux sensors in order to ensure that the majority of the magnetic field lines of the magnet Mi are captured by the magnetic flux sensors 51 and 52. Preferentially, the magnets according to the invention are arranged within said device 4 for having their magnetic field "entering" the conductive rail 3 perpendicularly to the surface of said conductive rail. Preferentially, there is an even number of magnets 41, wherein the pole (N for North/S for South) of the magnet facing the conductive rail 3 alternates from one magnet to the other one: the magnet M1 having its North pole facing the conductive rail at the time T_1, the magnet M2 having its South pole facing the conductive rail at the time T_2, and the magnet M_i having for instance the North pole facing the conductive rail 3 if i is an odd number and the South pole facing the conductive rail 3 if i is an even number. According to another embodiment, all magnets have their North pole facing the conductive rail 3 when they are at said closest distance from the conductive rail 3. According to another embodiment, all magnets have their South pole facing the conductive rail 3 when they are at said closest distance from the conductive rail 3. Accordingly, a detection area of each of the magnetic flux sensors 51, 52 is preferentially arranged perpendicular to the magnetic field B and thus parallel to said surface of the conductive rail 3 in order to maximize the effects of the Lenz's Law over the conductive rail 3. At the time T_i, the plane A is preferentially perpendicular to said surface of the conductive rail 3. In order to isolate the speed variable by cancelling out the magnetic field contribution of magnet force, gap distance, relative position and rail conductivity, the present invention proposes notably a sampling of the reciprocal magnetic flux BR1 and BR2 by respectively the first magnetic flux sensor 51 and the second magnetic flux sensor 52 at the time T_i and T_i only, i.e. when the plane A of symmetry of the magnetic field B becomes the plane of symmetry of the first and second magnetic flux sensors 51, 52, or in other words, if said plane of symmetry A passes through the center of the magnet 41, when said center of the magnet is at equal distance from the first magnetic flux sensor and from the second magnetic flux sensor. The symmetric construction of the system according to the invention at the time T_i highly improves the determination of the speed of the guided vehicle 2.

Preferentially, the controller 6 is configured for subtracting the value of the magnetic field measured by the first magnetic flux sensor 51 from the value of the magnetic field measured by the second magnetic flux sensor 52. Indeed, even if Lenz effect is completely compensated by the rotation of the spinning wheel 42, the magnetic field detected by each of the first and second magnetic flux sensors will be non-zero at the time T_i due to the magnetic field of the magnet Mi itself. As illustrated by Fig. 3, let's call B1, respectively B2, the magnetic field due exclusively and directly to the magnet 41 that is measured by the first magnetic flux sensor 51, respectively the second magnetic flux sensor 52. B1 and B2 correspond to the magnetic field measured at zero vehicle speed when the magnet 41 is at its position that is at the closest distance from the conductive rail 3, or also when vehicle speed is non zero but Lenz's effect is being compensated by the rotation of the spinning wheel 42. As the first magnetic flux sensor 51 is identical to the second magnetic flux sensor 52, and the sampling is made at the time T_i, at which, the first and second magnetic flux sensors are arranged symmetrically with respect to the plane A, the same flow of magnetic field is measured by the first and second magnetic flux sensors, that is the measurement of B1 by the first magnetic flux sensor will be equal to the measurement of B2 by the second magnetic flux sensor in magnitude and direction. Subtracting the value of the magnetic field measured by the first magnetic flux sensor 51 from the value of the magnetic field measured by the second magnetic flux sensor 52 (i.e. "B1 minus B2") will result in a magnetic field measurement wherein the value or effect of the magnetic field of the magnet itself has been cancelled or suppressed. If the guided vehicle is at standstill, the resulting value obtained by the controller would be for instance zero. In other words, the measurable magnetic effects other than Lenz's effect are cancelled out mathematically by the subtraction implemented by the controller 6. Advantageously, this cancellation is also effective with independence of external factors and changing environment conditions.

As explained by means of Fig. 1, the Lenz's effect created by the Eddy Currents shows different magnetic field directions on the leading edge of the moving magnet 41 with regard to the trailing edge. Indeed, the reciprocal magnetic field BR1 and the reciprocal magnetic field BR2 are equal in magnitude, but opposed in direction. Advantageously, the sampling of the magnetic field by the first and second magnetic field sensors at the time T_i and the subtraction of the corresponding measured values further improves the detection of the reciprocal magnetic fields BR1 and BR2 by adding their magnitudes, improving therefore their cancellation by a fine tuning of the angular velocity of the spinning wheel 42 by means of the controller 6. Indeed, the first magnetic flux sensor 51 and the second magnetic flux sensor 52 will measure at said time T_i an identical Lenz's magnetic field, but with different direction (i.e. |*̅B̅R̅*̅1̅(T_i)|=|*̅B̅R̅*̅2̅(T_i)| with *̅B̅R̅*̅1̅(T_i)=-*̅B̅R̅*̅2̅(T_i)). As explained before, when the controller 6 subtracts the measurement samples of the first magnetic flux sensor from the second magnetic flux sensor, said subtraction results in an addition of the magnitudes of BR1 and BR2. Said subtraction improves thus the detection of low Lenz magnetic fields, by adding the values of the Lenz magnetic field measured by the first and second magnetic flux sensors 51 and 52.

The present method of measurement by subtraction of magnetic flux values of the first magnetic flux sensor from the second magnetic flux sensor ensures that once the feedback loop for the control of the angular velocity of the spinning wheel gives rise to an angular velocity that compensates the measured detected magnetic flux density, then the angular velocity of the wheel will correspond to the linear speed of the guided vehicle. Advantageously, even if there are some changes in magnet field force, tilts of the guided vehicle, gap vibrations or rail conductivity changes at some moment, the present setup will ensure that the feedback loop will not change the angular velocity of the spinning wheel. Indeed, such changes are automatically cancelled out by the present setup, and therefore no other possible angular velocity for the spinning wheel will make the measured flux density lesser than for a current angular velocity.

Preferentially, the system according to the invention is able to perform an auto-calibration for compensating differences in measurement between the first and second magnetic flux sensors when the guided vehicle is at standstill by automatically placing one of the magnets 41 at its position that is at the closest distance from the conductive rail 3, performing calibration measurements by means of both the first and second magnetic flux sensors 51 and 52, and automatically calculating a compensation parameter by means of the controller 6 in order to ensure identical readouts for both the first and second magnetic flux sensors 51 and 52.

According to another embodiment, instead of having a fixed magnetic flux sensor as shown in Fig. 2-3, each magnet of the support, for instance of the spinning wheel, is coupled to a pair of magnetic flux sensors comprising as described above a first magnetic flux sensor and a second magnetic flux sensor that are identical and arranged symmetrically with respect to the plane A of symmetry of the magnetic field B of the magnet it is coupled with. In this case, the pair of magnetic flux sensors rotates together with the magnet they are coupled with. As before, the sampling is realized when the magnet is at a position that is at the closest distance to the conductive rail 3. According to this arrangement, a continuous calibration and compensation might be performed. Indeed, by coupling a pair of magnetic flux sensors to each magnet of the spinning wheel 42, the magnetic flux sensors are not any more fixed as it was the case in Fig. 2-3, and it is possible to take additional sampling measurements of the magnetic flux measured by said pair of magnetic sensors at positions other than said position that is at the closest distance from the conductive rail 3, for instance at a position where the magnet is far enough from the conductive rail 3 for not inducing measurable Eddy currents. In this case, magnetic field measurements performed by the magnetic flux sensors for such positions essentially result from the magnetic field of the magnet itself and not from any reciprocal magnetic field induced by Eddy currents. Similarly to the method previously described for the calibration, the readouts of both first and second magnetic flux sensors should be equal and the controller is configured for calculating any compensation parameter for equalling said readouts.

According to the present invention, the system 1 is mounted on-board the guided vehicle 2 moving over the conductive rail 3. Provided that the spinning wheel 42 is aligned to any edge of the conductive rail 3, the present invention proposes different possible configurations for said spinning wheel 42. As illustrated by Fig. 2-3, the spinning wheel 42 lays substantially in a vertical plane and faces a top surface of the conductive rail 3. According to another configuration, said spinning wheel 42 may lay substantially in a horizontal plane, facing therefore a side surface of the conductive rail 3. In both cases, the spinning wheel 42 and its magnets are arranged so as to have the plane A of symmetry of the magnetic field of said magnets substantially perpendicular to the extension direction R of the conductive rail 3 at the time T_i.

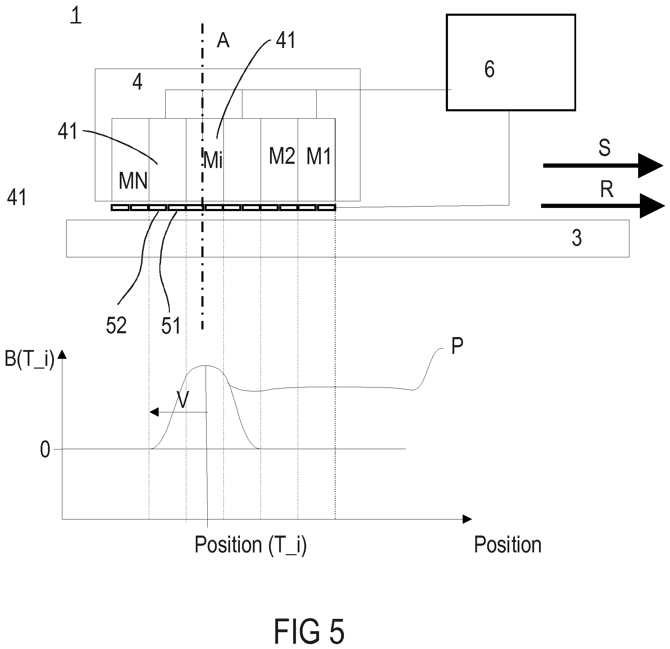

According the previous embodiments illustrated by Fig. 2-4, the device 4 was in particular configured for displacing said magnetic field B at least at said time T_i by means of a rotational motion of the magnet 41. Figure 5 presents schematically another preferred embodiment according to the invention, wherein the magnetic field B is translated in function of the time T according to a speed vector *̅V̅*̅ that is opposed to the speed vector *̅S̅*̅ characterizing the displacement of the guided vehicle. According to the embodiment of Fig. 5, the controller 6 is preferentially configured for controlling a plurality of identical electromagnets 41 of the device 4, so that the magnetic field B generated by said plurality of magnets 41 is translated according to said speed vector *̅V̅*̅ opposed in direction to the speed vector *̅S̅*̅, the magnitude of the speed vector *̅V̅*̅ being controlled by the controller 6 in function of magnetic field measurements by means of a magnetic flux sensor comprising preferentially a pair of identical magnetic flux sensors, respectively a first magnetic flux sensor 51 and a second magnetic flux sensor 52, wherein each electromagnet 41 is associated or coupled to one of said pair of identical magnetic flux sensors. Said electromagnets are preferentially aligned side by side with each other according to a direction parallel to the extension direction R of the conductive rail 3 when the system according to the invention is mounted on-board the guided vehicle. Each electromagnet 41 is facing a surface of the conductive rail, for instance a top surface or a side surface, so that its magnetic field is directed perpendicular to said surface of the conductive rail 3, each electromagnet being oriented for outputting a magnetic field that is parallel to the magnetic field output of its neighboring electromagnets.

The working principles of the present embodiment are the same as before, i.e. each electromagnet Mi, i=1,,N, with N the number of electromagnets, is configured for generating an identical magnetic field at a time T_i that is symmetric with respect to a plane A of symmetry, the first and second magnetic flux sensors being symmetrically arranged with respect to said plane A. The controller 6 is further configured for controlling the electromagnets so as to generate a magnetic field B for the device 4 whose intensity has a form of a wave or a pulse P in function of the position (see the graph of Fig. 5), said pulse or wave being controlled by the controller 6 for moving in function of the time in a direction opposed to the direction of displacement of the guided vehicle and at a speed V that is tuned by the controller 6 in order to minimize the magnetic field obtained by a subtraction of the magnetic field measured by the second magnetic field sensor from the magnetic field measured by the first magnetic flux sensor at the time T_i for the electromagnet Mi, wherein at said time T_i, said pulse or wave is symmetric with respect to the plane A of symmetry of the magnetic field of the electromagnet Mi. According to this other embodiment, the controller 6 controls thus the electromagnets Mi, so that they generate a succession of waves or pulses for instance by modifying the intensity of the magnetic field generated by said electromagnets in function of the time, said electromagnets being controlled by the controller for displacing said wave or pulse P in function of the time, so that the position of the wave relatively to the position of the conductive rail 3 remains the same in function of the time, so that the conductive rail 3 is not impacted by a change of the magnetic field. The sampling process is made at each time T_i wherein said pulse or wave becomes symmetrically arranged compared to the plane A of an electromagnet Mi by collecting the magnetic field values measured by the first and second magnetic flux sensors associated or coupled to the electromagnet Mi, wherein preferentially another wave or pulse is generated before the previous wave or pulse reaches the last magnetic flux detector while changing its position in function of time. The feedback loop implemented by the controller is then the same as previously described for tuning the speed V at which the wave or pulse is translating in function of the time, using in particular subtraction of the signals for improving the detection of the reciprocal magnetic fields induced in the conductive rail 3. The magnetic field generated by said plurality of electromagnets, i.e. said wave, is thus temporary immobile in a referential of the conductive rail (3).

Finally, the present invention presents the following additional advantages compared to existing prior art techniques:
- it is not affected by slip/slide events of supporting wheels of a guided vehicle;
- it can detect near-zero speed, which is an issue for odometer based on radar system;
- it is insensitive to strong climatic conditions as snow or hail.

## Claims

1. System (1) for determining the speed S of a guided vehicle (2) guided along a route by at least one conductive rail (3) extending according to its length along a direction R, the system (1) comprising:
- a device (4) for producing a magnetic field B capable of inducing Eddy currents in the conductive rail (3), said device (4) being capable of displacing the magnetic field B at a time T_i according to a speed vector *̅V̅*̅ that is parallel to the direction R of extension of the conductive rail (3);
- a magnetic flux sensor configured for measuring a reciprocal magnetic field resulting from the Eddy currents created in the conductive rail (3) by the magnetic field B;
- a controller connected to the device (4) and to the magnetic flux sensor in order to control the magnitude of the speed vector *̅V̅*̅ and its direction at said time T_i in function of a value of the reciprocal magnetic field measured by said magnetic flux sensor, the controller being configured for controlling said magnitude and direction of the speed vector *̅V̅*̅ so that at said time T_i, the reciprocal magnetic field measured by the magnetic flux sensor is minimized, leading to S = |*̅V̅*̅|.

2. System (1) according to claim 1, wherein the magnetic field B is homogeneous and comprises a plane A of symmetry dividing the magnetic field B into two parts, respectively a first magnetic field B1 and a second magnetic field B2 that are identical and symmetric with respect to the plane A, wherein the device (4) is configured for displacing said magnetic field B so that said plane A is substantially perpendicular to the extension direction R of the conductive rail at said time T_i.

3. System (1) according to claim 2, wherein the magnetic flux sensor comprises at least one pair of identical magnetic flux sensors, respectively a first magnetic flux sensor (51) located at a position that is on one side of the plane A at the time T_i, and a second magnetic flux sensor (52) located at a position that is on the other side of said plane A at said time T_i, arranged symmetrically with each other with respect to the plane A, wherein the first magnetic flux sensor (51) is configured for measuring a first reciprocal magnetic field (BR1) resulting from Eddy currents created in the conductive rail (3) by the first magnetic field B1 located on said one side of the plane A, and the second magnetic flux sensor (52) is configured for measuring a second reciprocal magnetic field (BR2) resulting from Eddy currents created in the conductive rail (3) by the second magnetic field B2 located on said other side of the plane A.

4. System (1) according to claim 3, wherein said controller (6) is configured for controlling the displacement of the magnetic field B provided by the device (4) by tuning the magnitude of the speed vector *̅V̅*̅ in function of the first and second reciprocal magnetic fields (BR1, BR2) measured by said pair of identical magnetic flux sensors (51, 52) in order to minimize magnetic field values measured by said pair of identical magnetic flux sensors.

5. System (1) according to claim 3 or 4, wherein said controller (6) is configured for subtracting the magnetic field value measured by the first magnetic flux sensor (51) from the magnetic field value measured by the second magnetic flux sensor (52) and controlling the displacement of the magnetic field B by tuning the magnitude of the speed vector *̅V̅*̅ in order to minimize the result obtained from said subtraction.

6. System (1) according to claims 1-5, wherein said device (4) comprises a spinning wheel (42) and a motor (43) for driving into rotation the spinning wheel (42), magnets (41) being arranged around the circumference of the spinning wheel (42) and the controller (6) controlling said motor (43) for tuning the magnitude of the speed vector *̅V̅*̅.

7. System (1) according to claim 6, wherein the magnetic flux sensor is located in a gap between the spinning wheel (42) and the conductive rail (3) so as to measure reciprocal magnetic fields generated within the conductive rail (3) when a magnet (41) of the spinning wheel (42) passes at a position that is at the closest distance from the conductive rail (3).

8. System (1) according to claims 1-5, wherein said device (4) comprises a plurality of identical electromagnets (41) mounted side by side and aligned with each other according to a direction that is parallel to the direction R of extension of the conductive rail (3).

9. Method for determining the speed S of a guided vehicle (2) guided along a route by at least one conductive rail (3) extending according to its length along a direction R, the method comprising:
- producing a magnetic field B capable of inducing Eddy currents in the conductive rail (3);
- measuring a reciprocal magnetic field resulting from the Eddy currents created in the conductive rail by the magnetic field B;
- displacing at a time T_i the magnetic field B according to a speed vector *̅V̅*̅ that is parallel to the direction R of extension of the conductive rail (3), wherein the magnitude and direction of the speed vector *̅V̅*̅ at said time T_i is controlled by a controller (6) in function of a value of the reciprocal magnetic field measured so that at said time T_i, the reciprocal magnetic field measured is minimized, leading to S = |*̅V̅*̅|.

10. Method according to claim 9, wherein the magnetic field B is homogeneous and comprises a plane A of symmetry dividing the magnetic field B into two parts, respectively a first magnetic field B1 and a second magnetic field B2 that are identical and symmetric with respect to the plane A.

11. Method according to claim 10, comprising using a pair of identical magnetic flux sensors, respectively a first magnetic flux sensor (51) located at a position that is on one side of the plane A at the time T_i, and a second magnetic flux sensor (52) located at a position that is on the other side of said plane A at said time T_i, arranged symmetrically with each other with respect to the plane A, wherein the first magnetic flux sensor (51) is configured for measuring a first reciprocal magnetic field (BR1) resulting from Eddy currents created in the conductive rail (3) by the first magnetic field B1 located on said one side of the plane A, and the second magnetic flux sensor (52) is configured for measuring a second reciprocal magnetic field (BR2) resulting from Eddy currents created in the conductive rail (3) by the second magnetic field B2 located on said other side of the plane A.

12. Method according to claim 11, comprising controlling the displacement of the magnetic field B by tuning the magnitude of the speed vector *̅V̅*̅ in function of the first and second reciprocal magnetic fields (BR1, BR2) measured by said pair of identical magnetic flux sensors (51, 52).

13. Method according to claim 11 or 12, comprising subtracting the magnetic field value measured by the first magnetic flux sensor (51) from the magnetic field value measured by the second magnetic flux sensor (52) and controlling the displacement of the magnetic field B by tuning the magnitude of the speed vector *̅V̅*̅ in order to minimize the result obtained from said subtraction.

14. Method according to one of the claims 9-13, comprising displacing the magnetic field B by rotating a spinning wheel (42) comprising magnets, wherein the rotation of said spinning wheel (42) is controlled by a controller (6) in function of values of magnetic field measured by a magnetic flux sensor.

15. Method according to one of the claims 9-13, comprising displacing said magnetic field B by controlling a plurality of identical electromagnets (41) mounted side by side and aligned with each other according to a direction that is parallel to the direction R of extension of the conductive rail (3) in order to create a temporary stationary magnetic field with respect to the conductive rail (3).

## Patentansprüche

1. System (1) zur Bestimmung der Geschwindigkeit S eines geführten Fahrzeugs (2), das durch mindestens eine leitfähige Schiene (3), die sich ihrer Länge entsprechend entlang einer Richtung R erstreckt, entlang einer Route geführt wird, wobei das System (1) Folgendes umfasst:
- eine Vorrichtung (4) zur Erzeugung eines Magnetfeldes B, das dazu geeignet ist, Wirbelströme in der leitfähigen Schiene (3) zu induzieren, wobei die Vorrichtung (4) dazu geeignet ist, das Magnetfeld B zu einem Zeitpunkt T_i entsprechend einem Geschwindigkeitsvektor *̅V̅*̅, der parallel zu der Richtung R der Erstreckung der leitfähigen Schiene (3) ist, zu verschieben,
- einen Magnetfluss-Sensor, der konfiguriert ist zum Messen eines reziproken Magnetfeldes, das aus den in der leitfähigen Schiene (3) durch das Magnetfeld B erzeugten Wirbelströmen resultiert,
- eine mit der Vorrichtung (4) und mit dem Magnetfluss-Sensor verbundene Steuereinrichtung, um die Größe des Geschwindigkeitsvektors *̅V̅*̅ und seine Richtung zu dem Zeitpunkt T_i in Abhängigkeit von einem Wert des von dem Magnetfluss-Sensor gemessenen reziproken Magnetfeldes zu steuern, wobei die Steuereinrichtung konfiguriert ist, die Größe und Richtung des Geschwindigkeitsvektors *̅V̅*̅ zu steuern, sodass zu dem Zeitpunkt T_i das von dem Magnetfluss-Sensor gemessene reziproke Magnetfeld minimiert ist, was zu S = |*̅V̅*̅| führt.

2. System (1) nach Anspruch 1, wobei das Magnetfeld B homogen ist und eine Symmetrieebene A umfasst, die das Magnetfeld B ein zwei Teile teilt, nämlich ein erstes Magnetfeld B1 und ein zweites Magnetfeld B2, die identisch und in Bezug auf die Ebene A symmetrisch sind, wobei die Vorrichtung (4) konfiguriert ist zum Verschieben des Magnetfeldes B, sodass die Ebene A im Wesentlichen senkrecht zu der Erstreckungsrichtung R der leitfähigen Schiene zu dem Zeitpunkt T_i ist.

3. System (1) nach Anspruch 2, wobei der Magnetfluss-Sensor mindestens ein Paar identischer Magnetfluss-Sensoren umfasst, nämlich einen ersten Magnetfluss-Sensor (51), der sich an einer Position befindet, die zu dem Zeitpunkt T_i auf einer Seite der Ebene A ist, und einen zweiten Magnetfluss-Sensor (52), der sich an einer Position befindet, die zu dem Zeitpunkt T_i auf der anderen Seite der Ebene A ist, die symmetrisch zueinander in Bezug auf die Ebene A angeordnet sind, wobei der erste Magnetfluss-Sensor (51) konfiguriert ist, um ein erstes reziprokes Magnetfeld (BR1) zu messen, das aus den in der leitfähigen Schiene (3) durch das auf der einen Seite der Ebene A befindliche erste Magnetfeld B1 erzeugten Wirbelströmen resultiert, und der zweite Magnetfluss-Sensor (52) konfiguriert ist, um ein zweites reziprokes Magnetfeld (BR2) zu messen, das aus den in der leitfähigen Schiene (3) durch das auf der anderen Seite der Ebene A befindliche zweite Magnetfeld B2 erzeugten Wirbelströmen resultiert.

4. System (1) nach Anspruch 3, wobei die Steuereinrichtung (6) konfiguriert ist zum Steuern der Verschiebung des von der Vorrichtung (4) bereitgestellten Magnetfeldes B durch Einstellen der Größe des Geschwindigkeitsvektors *̅V̅*̅ in Abhängigkeit von den durch das Paar identischer Magnetfluss-Sensoren (51, 52) gemessenen ersten und zweiten reziproken Magnetfeldern (BR1, BR2), um von dem Paar identischer Magnetfluss-Sensoren gemessene Magnetfeldwerte zu minimieren.

5. System (1) nach Anspruch 3 oder 4, wobei die Steuereinrichtung (6) konfiguriert ist zum Subtrahieren des durch den ersten Magnetfluss-Sensor (51) gemessenen Magnetfeldwertes von dem durch den zweiten Magnetfluss-Sensor (52) gemessenen Magnetfeldwert und Steuern der Verschiebung des Magnetfeldes B durch Einstellen der Größe des Geschwindigkeitsvektors *̅V̅*̅, um das durch die Subtraktion erhaltene Ergebnis zu minimieren.

6. System (1) nach den Ansprüchen 1 bis 5, wobei die Vorrichtung (4) ein drehendes Rad (42) und einen Motor (43) zum Versetzen des drehendes Rades (42) in Drehung umfasst, wobei Magnete (41) um den Umfang des drehenden Rades (42) angeordnet sind und die Steuereinrichtung (6) den Motor (43) zur Einstellung der Größe des Geschwindigkeitsvektors *̅V̅*̅ steuert.

7. System (1) nach Anspruch 6, wobei der Magnetfluss-Sensor sich in einer Lücke zwischen dem drehenden Rad (42) und der leitfähigen Schiene (3) befindet, um somit die innerhalb der leitfähigen Schiene (3) erzeugten reziproken Magnetfelder zu messen, wenn ein Magnet (41) des drehenden Rades (42) an einer Position mit dem kleinsten Abstand zu der leitfähigen Schiene (3) vorbeigeht.

8. System (1) nach den Ansprüchen 1 bis 5, wobei die Vorrichtung (4) eine Mehrzahl von identischen Elektromagneten umfasst, die nebeneinander angebracht und in einer Richtung zueinander ausgerichtet sind, die parallel zu der Richtung R der Erstreckung der leitfähigen Schiene (3) ist.

9. Verfahren zur Bestimmung der Geschwindigkeit S eines geführten Fahrzeugs (2), das durch mindestens eine leitfähige Schiene (3), die sich ihrer Länge entsprechend entlang einer Richtung R erstreckt, entlang einer Route geführt wird, wobei das Verfahren Folgendes umfasst:
- Erzeugen eines Magnetfeldes B, das dazu geeignet ist, Wirbelströme in der leitfähigen Schiene (3) zu induzieren,
- Messen eines reziproken Magnetfeldes, das aus den in der leitfähigen Schiene durch das Magnetfeld B erzeugten Wirbelströmen resultiert,
- Verschieben zu dem Zeitpunkt T_i des Magnetfeldes B entsprechend einem Geschwindigkeitsvektor *̅V̅*̅, der parallel zu der Richtung R der Erstreckung der leitfähigen Schiene (3) ist, wobei die Größe und Richtung des Geschwindigkeitsvektors *̅V̅*̅ zu dem Zeitpunkt T_i von einer Steuereinrichtung (6) in Abhängigkeit von einem Wert des gemessenen reziproken Magnetfelds gesteuert werden, sodass zu dem Zeitpunkt T_i das gemessene reziproke Magnetfeld minimiert ist, was zu S = |*̅V̅*̅| führt.

10. Verfahren nach Anspruch 9, wobei das Magnetfeld B homogen ist und eine Symmetrieebene A umfasst, die das Magnetfeld B ein zwei Teile teilt, nämlich ein erstes Magnetfeld B1 und ein zweites Magnetfeld B2, die identisch und in Bezug auf die Ebene A symmetrisch sind.

11. Verfahren nach Anspruch 10, umfassend die Verwendung eines Paares identischer Magnetfluss-Sensoren, nämlich eines ersten Magnetfluss-Sensors (51), der sich an einer Position befindet, die zu dem Zeitpunkt T_i auf einer Seite der Ebene A ist, und eines zweiten Magnetfluss-Sensors (52), der sich an einer Position befindet, die zu dem Zeitpunkt T_i auf der anderen Seite der Ebene A ist, die symmetrisch zueinander in Bezug auf die Ebene A angeordnet sind, wobei der erste Magnetfluss-Sensor (51) konfiguriert ist, um ein erstes reziprokes Magnetfeld (BR1) zu messen, das aus den in der leitfähigen Schiene (3) durch das auf der einen Seite der Ebene A befindliche erste Magnetfeld B1 erzeugten Wirbelströmen resultiert, und der zweite Magnetfluss-Sensor (52) konfiguriert ist, um ein zweites reziprokes Magnetfeld (BR2) zu messen, das aus den in der leitfähigen Schiene (3) durch das auf der anderen Seite der Ebene A befindliche zweite Magnetfeld B2 erzeugten Wirbelströmen resultiert.

12. Verfahren nach Anspruch 11, umfassend das Steuern der Verschiebung des Magnetfeldes B durch Einstellen der Größe des Geschwindigkeitsvektors *̅V̅*̅ in Abhängigkeit von den durch das Paar identischer Magnetfluss-Sensoren (51, 52) gemessenen ersten und zweiten reziproken Magnetfeldern (BR1, BR2).

13. Verfahren nach Anspruch 11 oder 12, umfassend das Subtrahieren des durch den ersten Magnetfluss-Sensor (51) gemessenen Magnetfeldwertes von dem durch den zweiten Magnetfluss-Sensor (52) gemessenen Magnetfeldwert und das Steuern der Verschiebung des Magnetfeldes B durch Einstellen der Größe des Geschwindigkeitsvektors *̅V̅*̅, um das durch die Subtraktion erhaltene Ergebnis zu minimieren.

14. Verfahren nach einem der Ansprüche 9 bis 13, umfassend das Verschieben des Magnetfeldes B durch Drehen eines drehendes Rades (42), das Magnete umfasst, wobei die Drehung des drehendes Rades (42) durch eine Steuereinrichtung (6) in Abhängigkeit von Werten des von einem Magnetfluss-Sensor gemessenen Magnetfeldes gesteuert wird.

15. Verfahren nach einem der Ansprüche 9 bis 13, umfassend das Verschieben des Magnetfeldes B durch Steuern einer Mehrzahl von identischen Elektromagneten (41), die nebeneinander angebracht und in einer Richtung zueinander ausgerichtet sind, die parallel zu der Richtung R der Erstreckung der leitfähigen Schiene R ist, um ein temporäres, stationäres Magnetfeld in Bezug auf die leitfähige Schiene (3) zu erzeugen.

## Revendications

1. Un système (1) de détermination de la vitesse S d'un véhicule guidé (2) guidé le long d'un itinéraire par au moins un rail conducteur (3) s'étendant en fonction de sa longueur le long d'une direction R, le système (1) comprenant :
- un dispositif (4) de production d'un champ magnétique B capable d'induire des courants de Foucault dans le rail conducteur (3), ledit dispositif (4) étant capable de déplacer le champ magnétique B à un instant T_i en fonction d'un vecteur de vitesse *̅V̅*̅ qui est parallèle à la direction R d'extension du rail conducteur (3),
- un capteur de flux magnétique configuré de façon à mesurer un champ magnétique réciproque résultant des courants de Foucault créés dans le rail conducteur (3) par le champ magnétique B,
- un dispositif de commande connecté au dispositif (4) et au capteur de flux magnétique afin de commander la norme du vecteur de vitesse *̅V̅*̅ et sa direction audit instant T_i en fonction d'une valeur du champ magnétique réciproque mesurée par ledit capteur de flux magnétique, le dispositif de commande étant configuré de façon à commander lesdites norme et direction du vecteur de vitesse *̅V̅*̅ de sorte qu'audit instant T_i, le champ magnétique réciproque mesuré par le capteur de flux magnétique soit minimisé, conduisant à S = |*̅V̅*̅|.

2. Le système (1) selon la revendication 1, dans lequel le champ magnétique B est homogène et comprend un plan A de symétrie qui divise le champ magnétique B en deux parties, respectivement un premier champ magnétique B1 et un deuxième champ magnétique B2 qui sont identiques et symétriques par rapport au plan A, le dispositif (4) étant configuré de façon à déplacer ledit champ magnétique B de sorte que ledit plan A soit sensiblement perpendiculaire à la direction d'extension R du rail conducteur audit instant T_i.

3. Le système (1) selon la revendication 2, dans lequel le capteur de flux magnétique comprend au moins une paire de capteurs de flux magnétique identiques, respectivement un premier capteur de flux magnétique (51) placé à une position qui est sur un côté du plan A à l'instant T_i, et un deuxième capteur de flux magnétique (52) placé à une position qui est sur l'autre côté dudit plan A audit instant T_i, agencés symétriquement l'un par rapport à l'autre par rapport au plan A, le premier capteur de flux magnétique (51) étant configuré de façon à mesurer un premier champ magnétique réciproque (BR1) résultant de courants de Foucault créés dans le rail conducteur (3) par le premier champ magnétique B1 situé sur ledit un côté du plan A, et le deuxième capteur de flux magnétique (52) étant configuré de façon à mesurer un deuxième champ magnétique réciproque (BR2) résultant de courants de Foucault créés dans le rail conducteur (3) par le deuxième champ magnétique B2 situé sur ledit autre côté du plan A.

4. Le système (1) selon la revendication 3, dans lequel ledit dispositif de commande (6) est configuré de façon à commander le déplacement du champ magnétique B fourni par le dispositif (4) par le réglage de la norme du vecteur de vitesse *̅V̅*̅ en fonction des premier et deuxième champs magnétiques réciproques (BR1, BR2) mesurés par ladite paire de capteurs de flux magnétique identiques (51, 52) afin de minimiser des valeurs de champ magnétique mesurées par ladite paire de capteurs de flux magnétique identiques.

5. Le système (1) selon la revendication 3 ou 4, dans lequel ledit dispositif de commande (6) est configuré de façon à soustraire la valeur de champ magnétique mesurée par le premier capteur de flux magnétique (51) de la valeur de champ magnétique mesurée par le deuxième capteur de flux magnétique (52) et à commander le déplacement du champ magnétique B par le réglage de la norme du vecteur de vitesse *̅V̅*̅ afin de minimiser le résultat obtenu à partir de ladite soustraction.

6. Le système (1) selon les revendications 1 à 5, dans lequel ledit dispositif (4) comprend une roue rotative (42) et un moteur (43) destiné à mettre en rotation la roue rotative (42), des aimants (41) qui sont agencés autour de la circonférence de la roue rotative (42) et du dispositif de commande (6) commandant ledit moteur (43) pour le réglage de la norme du vecteur de vitesse *̅V̅*̅.

7. Le système (1) selon la revendication 6, dans lequel le capteur de flux magnétique est installé dans un espace entre la roue rotative (42) et le rail conducteur (3) de façon à mesurer des champs magnétiques réciproques générés à l'intérieur du rail conducteur (3) lorsqu'un aimant (41) de la roue rotative (42) passe au niveau d'une position qui est à la distance la plus proche du rail conducteur (3).

8. Le système (1) selon les revendications 1 à 5, dans lequel ledit dispositif (4) comprend une pluralité d'électroaimants identiques (41) montés côté à côte et alignés les uns par rapport aux autres en fonction d'une direction qui est parallèle à la direction R d'extension du rail conducteur (3).

9. Le procédé de détermination de la vitesse S d'un véhicule guidé (2) guidé le long d'un itinéraire par au moins un rail conducteur (3) s'étendant en fonction de sa longueur le long d'une direction R, le procédé comprenant :
- la production d'un champ magnétique B capable d'induire des courants de Foucault dans le rail conducteur (3),
- la mesure d'un champ magnétique réciproque résultant des courants de Foucault créés dans le rail conducteur par le champ magnétique B,
- le déplacement à un instant T_i du champ magnétique B en fonction d'un vecteur de vitesse *̅V̅*̅ qui est parallèle à la direction R d'extension du rail conducteur (3), la norme et direction du vecteur de vitesse *̅V̅*̅ audit instant T_i étant commandées par un dispositif de commande (6) en fonction d'une valeur du champ magnétique réciproque mesuré de sorte qu'audit instant T_i, le champ magnétique réciproque mesuré soit minimisé, conduisant à S = |*̅V̅*̅|.

10. Le procédé selon la revendication 9, dans lequel le champ magnétique B est homogène et comprend un plan A de symétrie qui divise le champ magnétique B en deux parties, respectivement un premier champ magnétique B1 et un deuxième champ magnétique B2 qui sont identiques et symétriques par rapport au plan A.

11. Le procédé selon la revendication 10, comprenant l'utilisation d'une paire de capteurs de flux magnétique identiques, respectivement un premier capteur de flux magnétique (51) placé à une position qui est sur un côté du plan A à l'instant T_i, et un deuxième capteur de flux magnétique (52) placé à une position qui est sur l'autre côté dudit plan A audit instant T_i, agencés symétriquement l'un par rapport à l'autre par rapport au plan A, le premier capteur de flux magnétique (51) étant configuré de façon à mesurer un premier champ magnétique réciproque (BR1) résultant de courants de Foucault créés dans le rail conducteur (3) par le premier champ magnétique B1 situé sur ledit un côté du plan A, et le deuxième capteur de flux magnétique (52) étant configuré de façon à mesurer un deuxième champ magnétique réciproque (BR2) résultant de courants de Foucault créés dans le rail conducteur (3) par le deuxième champ magnétique B2 situé sur ledit autre côté du plan A.

12. Le procédé selon la revendication 11, comprenant la commande du déplacement du champ magnétique B par le réglage de la norme du vecteur de vitesse *̅V̅*̅ en fonction des premier et deuxième champs magnétiques réciproques (BR1, BR2) mesurés par ladite paire de capteurs de flux magnétique identiques (51, 52).

13. Le procédé selon la revendication 11 ou 12, comprenant la soustraction de la valeur de champ magnétique mesurée par le premier capteur de flux magnétique (51) de la valeur de champ magnétique mesurée par le deuxième capteur de flux magnétique (52) et la commande du déplacement du champ magnétique B par le réglage de la norme du vecteur de vitesse *̅V̅*̅ afin de minimiser le résultat obtenu à partir de ladite soustraction.

14. Le procédé selon l'une quelconque des revendications 9 à 13, comprenant le déplacement du champ magnétique B par la rotation d'une roue rotative (42) comprenant des aimants, la rotation de ladite roue rotative (42) étant commandée par un dispositif de commande (6) en fonction de valeurs de champ magnétique mesurées par un capteur de flux magnétique.

15. Le procédé selon l'une quelconque des revendications 9 à 13, comprenant le déplacement dudit champ magnétique B par la commande d'une pluralité d'électroaimants identiques (41) montés côté à côte et alignés les uns par rapport aux autres en fonction d'une direction qui est parallèle à la direction R d'extension du rail conducteur (3) afin de créer un champ magnétique stationnaire temporaire par rapport au rail conducteur (3).
